# EUROPÄISCHE PATENTSCHRIFT

(11) **EP 1 295 748 B1**
(45) Veröffentlichungstag und Bekanntmachung des Hinweises auf die Patenterteilung: **28.02.2007**
(21) Anmeldenummer: 02090196.3
(22) Anmeldetag: 31.05.2002
(51) Int. Cl.: B60K 15/05

(54) **Betätigungsvorrichtung für eine Abdeckung einer Karosserieöffnung**
Actuator for cover of a vehicle body opening
Actionneur de volet d'obturation d'une baie de carosserie

(30) Priorität: 21.09.2001 DE 10148199
(43) Veröffentlichungstag der Anmeldung: 26.03.2003
(73) Patentinhaber: Volkswagen Aktiengesellschaft, 38436 Wolfsburg (DE)
(72) Erfinder: Winkler, Bernd, 30938 Grossburgwedel (DE); Persiani, Luigi, 60027 Osimo (AN) (IT)
(74) Vertreter: Schneider, Henry

(56) Entgegenhaltungen:
- DE-A- 19 747 707
- GB-A- 2 278 873

## Beschreibung

Die Erfindung betrifft eine Betätigungsvorrichtung für eine Abdeckung einer Karosserieöffnung eines Kraftfahrzeugs, insbesondere für eine Tankklappe, mit den im Oberbegriff des Anspruchs 1 genannten Merkmalen.

Eine gattungsgemäße Betätigungsvorrichtungen für die Abdeckung einer Karosserieöffnung eines Kraftfahrzeugs, insbesondere für eine Tankklappe, ist aus der DE 196 16 315 und DE 198 42 690 vorbekannt.

Die in der DE 196 16 315 beschriebene Tankklappe hat die nachteilige Eigenschaft, dass zum Öffnen der Abdeckung eine Feder von innen auf die Tankklappe drückt und in geschlossener Stellung Kräfte unter kontinuierlicher Federspannung in die Tankklappe übertragen werden, wobei es über die Lebensdauer zu einer Verformung der Tankklappe kommen kann.

Nach der DE 198 42 690 ist eine Betätigungsvorrichtung für eine Abdeckung bestehend aus einem elektromotorischen Stellantrieb, einem Schließkeil und einer Stellstange vorbekannt. Mit diesen Maßnahmen wird ein Verriegelungselement, insbesondere für Klappen oder Türen, geschaffen, welches durch Belastung der Endlagen eine Arretierung der Abdeckung in Schließstellung ermöglicht.

Nachteilig ist hierbei, dass bei der Übertragung von Bewegungen mittels Zahnrädern durch den Antrieb ein hohes Geräuschniveau der Betätigungsvorrichtung entsteht und durch hohe Übersetzungsverhältnisse große Stellwege und Stellzeiten benötigt werden. Im Weiteren werden große Schub- und Anzugskräfte notwendig, was sich in seiner Gesamtheit nachteilig auf die Größe des Antriebes auswirkt.

Im Übrigen sind bekannte Betätigungsvorrichtungen für Abdeckungen mit hohen Kosten verbunden, da sie zumeist aus mehreren Zusammenbauelementen, wie Tankklappenmodul, Montageteil und Stellelement, bestehen.

Daraus abgeleitet ergibt sich der Nachteil, dass die Montage einer oder aller Komponenten der Betätigungsvorrichtung wesentlich erschwert wird. Insbesondere ist keine Montage von außen möglich, da der Antrieb über eine Verbindungsstange mit der zu betätigenden Abdeckung verbunden ist.

Weiterhin ist nachteilig, dass die bisherigen Betätigungsvorrichtungen für Abdeckungen nicht ohne Anpassungen universell in jedem Kraftfahrzeug eingesetzt werden konnten. Dadurch entsteht ein Mehraufwand beim Handling der unterschiedlichen Komponenten. Es bestehen bisher nur begrenzte Möglichkeiten der Standardisierung.

Der Erfindung liegt daher die Aufgabe zugrunde, eine Betätigungsvorrichtung der gattungsgemäßen Art für eine Abdeckung einer Karosserieöffnung eines Kraftfahrzeugs, insbesondere für eine Tankklappe, zu schaffen, mit der in einfacher Weise eine Schließstellung erreicht werden kann.

Erfindungsgemäß wird diese Aufgabe durch eine Betätigungseinrichtung mit den im Anspruch 1 genannten Merkmalen gelöst. Bevorzugte Ausgestaltungen der Erfindung beschreiben die Unteransprüche.

Die Aufgabe wird gemäß der Erfindung dadurch gelöst, dass die Betätigungsvorrichtung einen Verschlussmechanismus aufweist, der beim Schließen der Abdeckvorrichtung, insbesondere einer Tankklappe, durch den Eingriff des Verriegelungselementes in das Aufnahmeelement der Tankklappe eine kraftschlüssige Verbindung herstellt, die vorteilhafterweise keine Kräfte in die Tankklappe einleitet, wobei die Tankklappe durch die zugleich stattfindende translatorische und rotorische Bewegung (bajonettverschlussartig) eines Verriegelungszapfens in Richtung der Karosserieöffnung bewegt und verriegelt wird und damit eine oberflächenplane Karosserie im Bereich der Tankklappenmulde erzeugt. Gleichzeitig ist die zur Betätigungsvorrichtung gehörende Arretiervorrichtung erfindungsgemäß so ausgestattet, dass ein sicheres Arretieren der Tankklappe ohne direkten Krafteintrag in die Tankklappe gewährleistet ist.

Der Erfindung liegt weiterhin der Gedanke zugrunde, dass durch eine vorteilhafte Anordnung der Elemente der Betätigungsvorrichtung nur geringe Schub- und Anzugsmomente notwendig sind, die geringe Stellwege und daraus resultierend Stellzeiten zur Folge haben sowie zur Vermeidung von Geräuschen bei der Betätigung der Vorrichtung führen.

Eine bevorzugte Ausgestaltung der Erfindung sieht vor, dass die Betätigungsvorrichtung einen Verriegelungszapfen umfasst, der in einer Gehäusebuchse geführt und durch eine schraubenlinienförmige Längsnut mit der Arretiervorrichtung wirkverbunden ist. Vorzugsweise weist die Arretiervorrichtung ein Sperrglied auf, welches mittels eines Verriegelungspins, über die schraubenlinienfömige Nut geführt, eine Arretierung ermöglicht. Der geringe Bewegungsweg, der durch die translatorische und rotierende Bewegung des Verriegelungszapfens zur Arretierung desselben mittels Verriegelungspin der Arretiervorrichtung benötigt wird, führt vorteilhafter Weise zu einem geringen Stellweg und somit zu einer geringen Stellzeit.

In bevorzugter Ausgestaltung wird das Schließen gegen die Kraft eines Federelementes manuell vorgenommen, wodurch eine einfache, robuste, geräuscharme, schnelle und verhältnismäßig kraftarme Betätigung realisiert ist. Diese Schließbetätigung ermöglicht umgekehrt nach Lösen der Arretiervorrichtung durch die Entspannung des Federelementes eine mit gleichen Eigenschaften zu beschreibende vorteilhafte Öffnungsfunktion.

In weiterer bevorzugter Ausgestaltung der Erfindung ist die Arretiereinrichtung so ausgeführt, dass die Arretierung des Verriegelungszapfens durch die Federvorspannung eines Federelementes und geeignete Führung in der schraubenlinienförmigen Längsnut des Verriegelungszapfens eine einfache Lösung bezüglich der Aufgabenstellung darstellt.

Die Entriegelung des Verriegelungsgzapfens erfolgt vorzugsweise durch einen Antrieb, der geringe Kräfte und Stellwege überwinden beziehungsweise überbrücken muss, um den Verriegelungszapfen freizugeben. Diese erfindungsgemäße Lösung führt zu einem Stellantrieb mit geringem Hub, ohne Übertragungselemente wie Zahnrädern oder Verbindungsstangen und damit zu geringer Baugröße und zu einer geräuscharmen Betätigung.

Der Erfindung liegt weiterhin der Gedanke zugrunde, dass alle benötigten Elemente der Betätigungsvorrichtung auf kleinstem Raum zusammenwirken. Erfindungsgemäß werden vorteilhafterweise alle Elemente in ein Gehäuse mit Gehäusedeckel integriert.

Zweckmäßigerweise wird Gehäuse und Gehäusedeckel mit einer Dichtung versehen, wodurch eine spritzwasser- und staubgeschützte Kompaktlösung realisierbar ist, die ohne weiteres standardisiert werden kann. Hierdurch wird eine kostengünstige Massenproduktion möglich.

Die Erfindung wird nachfolgend in einem Ausführungsbeispiel anhand der zugehörigen Zeichnungen näher erläutert. Es zeigen:
- Figur 1: eine Schnittdarstellung der Betätigungsvorrichtung bei geöffneter Tankklappe;
- Figur 2: eine Ansicht nach der Linie A-A der Figur 1;
- Figur 3: eine Schnittdarstellung der Betätigungsvorrichtung bei geschlossener Tankklappe;
- Figur 4: eine Ansicht nach der Linie A-A der Figur 3 und
- Figur 5: eine Schnittdarstellung als Draufsicht der Betätigungsvorrichtung bei geschlossener Tankklappe.

Die in den Zeichnungen dargestellte Betätigungsvorrichtung 12 umfasst im Wesentlichen einen stabförmigen Verriegelungszapfen 16, eine Arretiervorrichtung 20, einen Verschlussmechanismus 10, eine im Wesentlichen flache Abdeckung 14, die als Tankklappe 15 ausgebildet ist, sowie einen Antrieb 48.

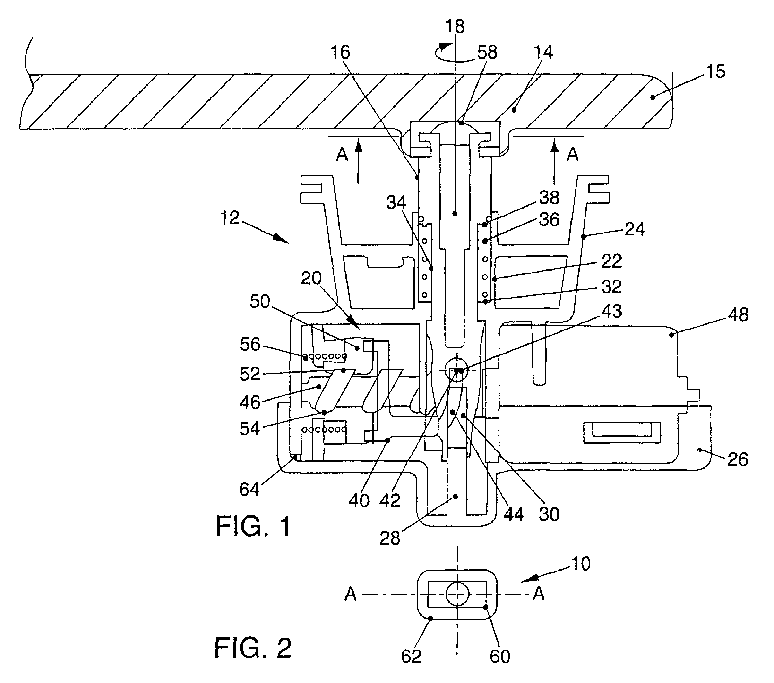

Der Verriegelungszapfen 16 wird sowohl im Gehäuse 24, einer Gehäusebuchse 22 und von einem Führungsstift 28 im Gehäusedeckel 26 geführt. Der Verriegelungszapfen 16 ist mit einer Ringnut 34 ausgebildet und an der der Tankklappe 15 abgewandten Seite des Verriegelungszapfens 16 befindet sich eine Führungsbohrung 30, die mit dem Führungsstift 28 korrespondiert. Oberhalb der Führungsbohrung 30 ist eine schraubenlinienförmige Längsnut 44 angeordnet, die in Richtung der Tankklappe 15 verlaufend an einer Öffnung 43 im Verriegelungszapfen 16 endet. Die Ringnut 34 des Verriegelungszapfens 16 bildet einerseits an einem Ringsteg 32 des Gehäuses 24 und andererseits an einer Ringschulter 38 des Verriegelungszapfens 16 Bewegungsanschläge aus. Zwischen der Ringschulter 38 und dem Ringsteg 32 ist ein Federelement 36 angeordnet, das bei Öffnungsstellung des Verriegelungszapfens 16, gemäß Figur 1, in nahezu entspannter Form abgestützt ist.

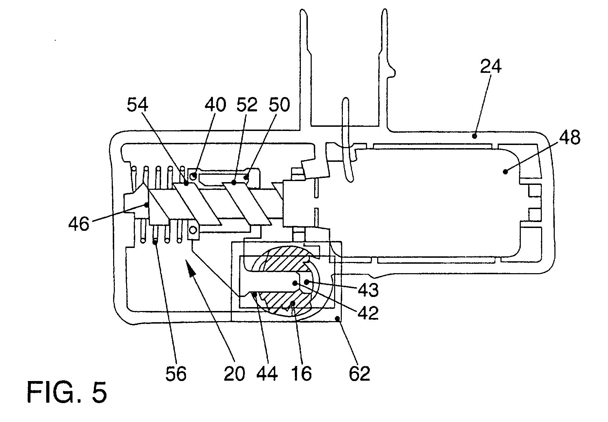

Die Arretiervorrichtung 20 umfasst ein bistabiles Sperrglied 40, welches radial zur Längsachse 18 des Verriegelungszapfens 16 verlagerbar ist und tangential am Verriegelungszapfen 16 vorbeigeführt ist. Gemäß Figur 5 ist ersichtlich, dass exzentrisch der Achse des Sperrgliedes 40 ein Verriegelungspin 42 mit konischer Spitze vom Sperrglied 40 abkragt, wobei gemäß Figur 1 ersichtlich ist, dass bei geöffneter Stellung der Tankklappe 15 die konische Spitze des Verriegelungspins 42 mit der schraubenlinienförmigen Längsnut 44 korrespondiert und durch das Federelement 56 in die Längsnut 44 gedrückt wird. Das Sperrglied 40 ist buchsenartig, koaxial zur Längsachse einer Welle 46 über ein Rückstellelement 50 geführt und über ein Muttergewinde 52 auf dem zugewandten Umfang der Welle 46 mit dem korrespondierenden Steigungsgewinde 54 der Welle 46 wirkverbunden. Der Welle 46 ist in axialer Verlängerung ein Antrieb 48 zugeordnet. Der Antrieb 48 ist beispielsweise ein E-Motor. Die Arretiervorrichtung 20 wird durch ein Federelement 56 vervollständigt, welches sich einerseits am Sperrglied 40 und andererseits am Gehäuse 24 abstützt. Gemäß Figur 1 ist das Federelement 56 in seiner gespannten Form dargestellt, wobei eine definierte Kraft auf das Sperrglied 40 aufgebracht wird.

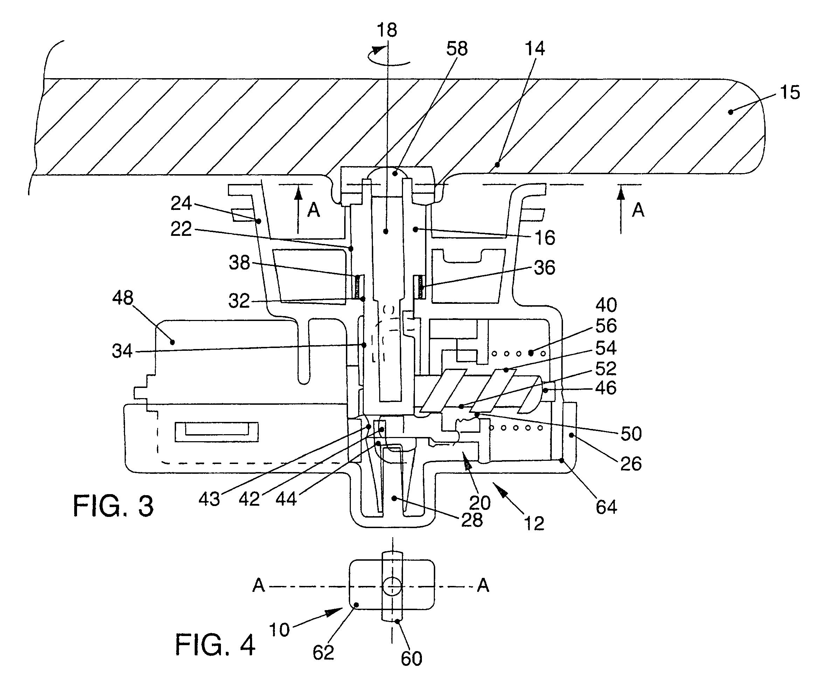

Der Verriegelungszapfen 16 weist an seiner der Tankklappe 15 zugewandten Seite ein Druckstück 58 auf. Im Bereich des Druckstückes 58 weist der Verriegelungszapfen 16 ein Verriegelungselement 60 auf, welches gemäß Figur 2 in geöffneter Position und gemäß Figur 4 in geschlossener Position dargestellt ist. Ersichtlich ist aus Figur 2, dass das Verriegelungselement 60 aus zwei stegartigen Nasen gebildet wird, welche mit dem Aufnahmelement 62 als integraler Bestandteil der Tankklappe 15 korrespondieren und bei geöffneter Stellung des Verriegelungszapfens 16 vom Aufnahmeelement 62 umfasst werden. In geschlossener Position gemäß Figur 4 ist ersichtlich, dass das Verriegelungselement 60 das Aufnahmeelement 62 hintergreift und eine Verbindung herstellt.

### Die Wirkungsweise der Betätigungsvorrichtung ist folgende:

Als Ausgangsposition stellt Figur 1 die Betätigungsvorrichtung 12 mit geöffneter Tankklappe 15 dar. Zum Schließen der Tankklappe 15 wird die Tankklappe auf das Druckstück 58 gedrückt, wobei die kugelförmige Form des Druckstückes 58 nur einen geringen Auflagebereich zulässt. Durch den erzeugten Anpressdruck wird der Verriegelungszapfen 16 translatorisch in Richtung des Gehäusedeckels 26 verschoben und parallel dazu findet eine rotorische Bewegung des Verriegelungszapfens 16 um seine Achse 18 statt und das Federelement 36 wird gespannt. Bei dieser bajonettverschlussartigen Bewegung um die Achse 18 greift das Verriegelungselement 60 in das Aufnahmeelement 62 ein und bewegt die Tankklappe 15 translatorisch in Richtung des Gehäusedeckels 26. Gleichzeitig wird der zum Sperrglied 40 gehörende Verriegelungspin 42 über das Federelement 56 in Wirkverbindung über das Sperrglied 40 an den Verriegelungszapfen 16 gedrückt und in der schraubenlinienförmigen Längsnut 44 geführt und in Richtung der Öffnung 43 bewegt mit dem Ergebnis, dass der Verriegelungspin 42 soweit in die Öffnung 43 eindringt, wie es die konische Spitze des Verriegelungspins 42 zulässt (siehe dazu Figur 3, 4 und 5). Das Federelement 56 wird bei diesem Vorgang weitestgehend entspannt, das Sperrglied 40 und das Rückstellelement 50 bewegen sich gemeinsam aufgrund der bestehenden Wirkverbindung tangential zum Verriegelungszapfen 16 um eine definierte Hublänge, die genau der Eindringlänge des Verriegelungspins 42 in den Verriegelungszapfen 16 entspricht. Die Tankklappe 15 ist geschlossen und arretiert.

Zur Öffnung der Tankklappe wird durch Betätigung des Antriebs 48, beispielsweise durch Betätigung eines elektrischen Schaltelementes in der Armaturentafel eines Kraftfahrzeuges, das Ausrasten des Verriegelungspins 42 ermöglicht. Durch die Betätigung des Antriebs 48 wird die Welle 46 und das über das Steigungsgewinde 54 der Welle 46 mit dem Muttergewinde 52 wirkverbundene Rückstellelement 50 in seine Ausgangsposition rückgeführt. Durch die Wirkverbindung zwischen Rückstellelement 50 und Sperrglied 40 erfolgt die Rückbewegung des Verriegelungspins 42 aus der Öffnung 43 des Verrieglungszapfens 16. Die Arretierung ist aufgeboben. Durch das bei der Schließbewegung gespannte Federelement 36 wird der Verriegelungszapfen 16 bajonettverschlussartig, um seine Achse 18 rotierend und translatorisch in die Richtung der Tankklappe 15, in seine Ausgangsposition, zurück bewegt. Die Führung der Bewegung erfolgt durch die schraubenlinienförmige Längsnut 44, in die der Verriegelungspin 42 nach dem Verlassen der Öffnung 43 einkragt, und die Bewegungslänge erfolgt durch den definierten Bewegungsanschlag der Ringnut 34 am Ringsteg 32. Nach diesem Vorgang ist das Federelement 36 entspannt und wieder in seine Ausgangsposition zurückgekehrt und das Druckstück 58 öffnet nach zeitgleicher Entriegelung des Verschlussmechanismus 10 die Tankklappe. Ein Hintergreifen der geöffneten Tankklappe ist somit problemlos möglich.

In den Figuren 1, 3 und 5 ist erkennbar, dass die wesentlichen Teile der Bedienungsvorrichtung, der Verriegelungszapfen 16, die Arretiervorrichtung 20 und der Antrieb 48 in dem Gehäuse 24 und in dem Gehäusedeckel 26 untergebracht sind. Eine umlaufende Dichtung 64 zwischen Gehäuse 24 und Gehäusedeckel 26 schützt die Teile vor Staub- und Spritzwasser.

### BEZUGSZEICHENLISTE

- 10: Verschlussmechanismus
- 12: Betätigungsvorrichtung
- 14: Abdeckung
- 15: Tankklappe
- 16: Verriegelungszapfen
- 18: Längsachse
- 20: Arretiervorrichtung
- 22: Gehäusebuchse
- 24: Gehäuse
- 26: Gehäusedeckel
- 28: Führungsstift
- 30: Führungsbohrung
- 32: Ringsteg
- 34: Ringnut
- 36: Federelement
- 38: Ringschulter
- 40: Sperrglied
- 42: Verriegelungspin
- 43: Öffnung
- 44: schraubenlinienförmige Längsnut
- 46: Welle
- 48: Antrieb
- 50: Rückstellelement
- 52: Muttergewinde
- 54: Steigungsgewinde
- 56: Federelement
- 58: Druckstück
- 60: Verriegelungselement
- 62: Aufnahmeelement
- 64: Gummidichtung

## Patentansprüche

1. Betätigungsvorrichtung (12) für eine Abdeckung (14) einer Karosserieöffnung eines Kraftfahrzeugs, insbesondere für eine Tankklappe (15), **dadurch gekennzeichnet, dass** ein Verschlussmechanismus (10) der Betätigungsvorrichtung (12) einen mit der Abdeckung (14) wirkverbundenen Verriegelungszapfen (16) umfasst, der zur Erreichung der Schließstellung der Abdeckung (14) um seine Längsachse (18) bajonettverschlussartig drehbar gelagert ist und mit einer Arretiervorrichtung (20) zusammenwirkt.

2. Betätigungsvorrichtung nach Anspruch 1, **dadurch gekennzeichnet, dass** der Verriegelungszapfen (16) in einer Gehäusebuchse (22) eines Gehäuses (24) geführt ist.

3. Betätigungsvorrichtung nach einem der vorhergehenden Ansprüche, **dadurch gekennzeichnet, dass** ein Gehäusedeckel (26) einen zusätzlichen Führungsstift (28) zur Führung des Verriegelungszapfens (16) ausbildet.

4. Betätigungsvorrichtung nach einem der vorhergehenden Ansprüche, **dadurch gekennzeichnet, dass** der Verriegelungszapfen (16) an seiner der Abdeckung (14) abgewandten Seite eine Führungsbohrung (30) zur Aufnahme des Führungsstiftes (28) aufweist.

5. Betätigungsvorrichtung nach einem der vorhergehenden Ansprüche, **dadurch gekennzeichnet, dass** der Verriegelungszapfen (16) zur Ausbildung von Bewegungsanschlägen an einem Ringsteg (32) der Gehäusebuchse (22) eine Ringnut (34) ausbildet.

6. Betätigungsvorrichtung nach einem der vorhergehenden Ansprüche, **dadurch gekennzeichnet, dass** im Umfang des Verriegelungszapfens (16) im Bereich der Ringnut (34) ein Federelement (36) angeordnet ist, dass sich einerseits an einer Ringschulter (38) des Verriegelungszapfens (16) und andererseits an dem Ringsteg (32) der Gehäusebuchse (22) abstützt.

7. Betätigungsvorrichtung nach einem der vorhergehenden Ansprüche, **dadurch gekennzeichnet, dass** die Arretiervorrichtung (20) ein bistabiles Sperrglied (40) umfasst.

8. Betätigungsvorrichtung nach einem der vorhergehenden Ansprüche, **dadurch gekennzeichnet, dass** das Sperrglied (40) einen konischen Verriegelungspin (42) umfasst, der in eine schraubenlinienförmige Längsnut (44) des Verriegelungszapfens (16) einkragt.

9. Betätigungsvorrichtung nach einem der vorhergehenden Ansprüche, **dadurch gekennzeichnet, dass** das Sperrglied (40) radial zu der Längsachse des Verriegelungszapfens (16) verlagerbar ist und der Verriegelungspin (42) des Sperrgliedes (40) mit der schraubenlinienförmigen Längsnut (44) des Verriegelungszapfens (16) korrespondiert.

10. Betätigungsvorrichtung nach einem der vorhergehenden Ansprüche, **dadurch gekennzeichnet, dass** der Verriegelungspin (42) des Sperrgliedes (40) in geschlossener Stellung in eine Öffnung des Verriegelungszapfens (16) eingreift, wobei seine Konizität als Begrenzung dient.

11. Betätigungsvorrichtung nach einem der vorhergehenden Ansprüche, **dadurch gekennzeichnet, dass** das Sperrglied (40) koaxial zur Längsachse einer Welle (46) eines Antriebes (48), insbesondere eines Elektromotors, angeordnet ist und über ein Rückstellelement (50) mit der Welle (46) des Antriebes (48) wirkverbunden ist.

12. Betätigungsvorrichtung nach einem der vorhergehenden Ansprüche, **dadurch gekennzeichnet, dass** das Rückstellelement (50) auf dem der Welle (46) zugewandten Umfang ein Muttergewinde (52) aufweist, welches mit dem Steigungsgewinde (54) der Welle (46) korrespondiert.

13. Betätigungsvorrichtung nach einem der vorhergehenden Ansprüche, **dadurch gekennzeichnet, dass** die Welle (46) tangential am Verriegelungszapfen (16) vorbeigeführt ist.

14. Betätigungsvorrichtung nach einem der vorhergehenden Ansprüche, **dadurch gekennzeichnet, dass** die Arretiervorrichtung (20) ein Federelement (56) umfasst, dass sich einerseits am Sperrglied (40) der Arretiervorrichtung (20) und andererseits am Gehäuse (24) abstützt.

15. Betätigungsvorrichtung nach einem der vorhergehenden Ansprüche, **dadurch gekennzeichnet, dass** über das Federelement (56) eine Verriegelungskraft auf das Sperrglied (40) aufbringbar ist.

16. Betätigungsvorrichtung nach einem der vorhergehenden Ansprüche, **dadurch gekennzeichnet, dass** der Verriegelungszapfen (16) an seinem der Abdeckung (14) zugewandten Ende ein Druckstück (58) aufweist.

17. Betätigungsvorrichtung nach einem der vorhergehenden Ansprüche, **dadurch gekennzeichnet, dass** das Druckstück (58) zumindest im Auflagebereich der Abdeckung (14) eine Kugelform besitzt.

18. Betätigungsvorrichtung nach einem der vorhergehenden Ansprüche, **dadurch gekennzeichnet, dass** der Verriegelungszapfen (16) unterhalb des Druckstückes (58) ein Verriegelungselement (60) aufweist.

19. Betätigungsvorrichtung nach einem der vorhergehenden Ansprüche, **dadurch gekennzeichnet, dass** im Auflagebereich der Tankklappe (15) auf das Druckstück (58) in die Tankklappe (15) ein Aufnahmeelement (62) integriert ist, welches bei geöffneter angelegter Stellung der Tankklappe (15) mit dem Verriegelungselement (60) korrespondiert.

20. Betätigungsvorrichtung nach einem der vorhergehenden Ansprüche, **dadurch gekennzeichnet, dass** die rotierende und translatorische Bewegung des Verriegelungszapfens (16) das Aufnahmeelement (62) mit dem Verriegelungselement (60) kraftschlüssig verbindet.

21. Betätigungsvorrichtung nach einem der vorhergehenden Ansprüche, **dadurch gekennzeichnet, dass** der Verriegelungszapfen (16), die Arretiervorrichtung (20) und der Antrieb in das Gehäuse (24) und den Gehäusedeckel (26) integriert sind.

22. Betätigungsvorrichtung nach einem der vorhergehenden Ansprüche, **dadurch gekennzeichnet, dass** eine umspritzte Gummidichtung (64) zwischen dem Gehäuse (24) und dem Gehäusedeckel (26) angeordnet ist.

23. Abdeckung für eine Karosserieöffnung eines Kraftfahrzeuges, insbesondere Tankklappe, **gekennzeichnet durch** eine Betätigungsvorrichtung nach einem der Ansprüche 1 bis 22.

## Claims

1. Actuator (12) for a cover (14) for an opening in the body of a motor vehicle, in particular for a fuel filler flap (15), **characterized in that** a closing mechanism (10) of the actuator (12) comprises a latching lug (16) in active connection with the cover (14), which latching lug (16) is mounted so as to be rotatable in the manner of a bayonet catch around its longitudinal axis (18) to achieve the closed position of the cover (14) and interacts with a locking device (20).

2. Actuator according to Claim 1, **characterized in that** the latching lug (16) is guided in a housing bushing (22) of a housing (24).

3. Actuator according to one of the preceding claims, **characterized in that** a housing lid (26) forms an additional guide pin (28) for guiding the latching lug (16).

4. Actuator according to one of the preceding claims, **characterized in that** the latching lug (16) comprises a guide bore (30) on its side remote from the cover (14) for accommodating the guide pin (28).

5. Actuator according to one of the preceding claims, **characterized in that** the latching lug (16) forms an annular groove (34) for forming movement limit stops on an annular web (32) of the housing bushing (22).

6. Actuator according to one of the preceding claims, **characterized in that** a spring element (36) is arranged in the circumference of the latching lug (16) in the area of the annular groove (34), which spring element rests on the one hand on an annular shoulder (38) of the latching lug (16) and on the other hand on the annular web (32) of the housing bushing (22).

7. Actuator according to one of the preceding claims, **characterized in that** the locking device (20) comprises a bistable detent (40).

8. Actuator according to one of the preceding claims, **characterized in that** the detent (40) comprises a conical latching pin (42), which engages in a helical longitudinal groove (44) in the latching lug (16).

9. Actuator according to one of the preceding claims, **characterized in that** the detent (40) may be displaced radially relative to the longitudinal axis of the latching lug (16) and the latching pin (42) of the detent (40) corresponds with the helical longitudinal groove (44) in the latching lug (16).

10. Actuator according to one of the preceding claims, **characterized in that** the latching pin (42) of the detent (40) engages in the closed position in an opening in the latching lug (16), wherein its conicity serves as a limiting factor.

11. Actuator according to one of the preceding claims, **characterized in that** the detent (40) is arranged coaxially to the longitudinal axis of a shaft (46) of a drive (48), in particular an electric motor, and is actively connected to the shaft (46) of the drive (48) via a resetting element (50).

12. Actuator according to one of the preceding claims, **characterized in that** the resetting element (50) comprises an internal thread (52) on its circumference facing the shaft (46), which thread corresponds with the external thread (54) on the shaft (46).

13. Actuator according to one of the preceding claims, **characterized in that** the shaft (46) extends tangentially past the latching lug (16).

14. Actuator according to one of the preceding claims, **characterized in that** the locking device (20) comprises a spring element (56), which rests on the one hand on the detent (40) of the locking device (20) and on the other hand on the housing (24).

15. Actuator according to one of the preceding claims, **characterized in that** a latching force may be applied to the detent (40) via the spring element (56).

16. Actuator according to one of the preceding claims, **characterized in that** the latching lug (16) comprises a pressure member (58) at its end facing the cover (14).

17. Actuator according to one of the preceding claims, **characterized in that** the pressure member (58) is spherical in shape at least in the bearing area of the cover (14).

18. Actuator according to one of the preceding claims, **characterized in that** the latching lug (16) comprises a latching element (60) beneath the pressure member (58).

19. Actuator according to one of the preceding claims, **characterized in that** a receiving element (62) is incorporated into the fuel filler flap (15) in the area in which the fuel filler flap (15) bears on the pressure member (58), which receiving element (62) corresponds to the latching element (60) when the fuel filler flap (15) is in the open, resting position.

20. Actuator according to one of the preceding claims, **characterized in that** the rotational and translational movement of the latching lug (16) effects frictional connection of the receiving element (62) with the latching element (60).

21. Actuator according to one of the preceding claims, **characterized in that** the latching lug (16), the locking device (20) and the drive are incorporated into the housing (24) and the housing lid (26).

22. Actuator according to one of the preceding claims, **characterized in that** a moulded-in rubber gasket (64) is arranged between the housing (24) and the housing lid (26).

23. Cover for an opening in the body of a motor vehicle, in particular a fuel filler flap, **characterized by** an actuator according to one of Claims 1 to 22.

## Revendications

1. Actionneur (12) pour un volet d'obturation (14) d'une baie de carrosserie d'un véhicule automobile, notamment pour un volet d'obturation du bouchon de remplissage (15), **caractérisé en ce qu'**un mécanisme de fermeture (10) de l'actionneur (12) comprend un tourillon de verrouillage (16) associé fonctionnellement au volet d'obturation (14), qui est monté de manière à pouvoir tourner autour de son axe longitudinal (18) à la manière d'une fermeture de type baïonnette pour atteindre la position de fermeture du volet d'obturation (14) et qui coopère avec un dispositif de blocage (20).

2. Actionneur selon la revendication 1, **caractérisé en ce que** le tourillon de verrouillage (16) est guidé dans une douille de boîtier (22) d'un boîtier (24).

3. Actionneur selon l'une quelconque des revendications précédentes, **caractérisé en ce qu'**un couvercle du boîtier (26) constitue une goupille de guidage supplémentaire (28) pour guider le tourillon de verrouillage (16).

4. Actionneur selon l'une quelconque des revendications précédentes, **caractérisé en ce que** le tourillon de verrouillage (16) présente, sur son côté opposé au volet d'obturation (14), un alésage de guidage (30) pour recevoir la goupille de guidage (28).

5. Actionneur selon l'une quelconque des revendications précédentes, **caractérisé en ce que** le tourillon de verrouillage (16) constitue une rainure annulaire pour réaliser des butées de mouvement sur une nervure annulaire (32) de la douille de boîtier (22).

6. Actionneur selon l'une quelconque des revendications précédentes, **caractérisé en ce qu'**un élément de ressort (36) est disposé dans la périphérie du tourillon de verrouillage (16) dans la région de la rainure annulaire (34), cet élément de ressort s'appuyant d'une part contre un épaulement annulaire (38) du tourillon de verrouillage (16) et d'autre part contre la nervure annulaire (32) de la douille de boîtier (22).

7. Actionneur selon l'une quelconque des revendications précédentes, **caractérisé en ce que** le dispositif de blocage (20) comprend un organe d'arrêt bistable (40).

8. Actionneur selon l'une quelconque des revendications précédentes, **caractérisé en ce que** l'organe d'arrêt (40) comprend une broche de verrouillage conique (42) qui s'encastre dans une rainure longitudinale hélicoïdale (44) du tourillon de verrouillage (16).

9. Actionneur selon l'une quelconque des revendications précédentes, **caractérisé en ce que** l'organe d'arrêt (40) peut être déplacé radialement par rapport à l'axe longitudinal du tourillon de verrouillage (16) et la broche de verrouillage (42) de l'organe d'arrêt (40) correspond à la rainure longitudinale hélicoïdale (44) du tourillon de verrouillage (16).

10. Actionneur selon l'une quelconque des revendications précédentes, **caractérisé en ce que** la broche de verrouillage (42) de l'organe d'arrêt (40) vient en prise dans la position fermée dans une ouverture du tourillon de verrouillage (16), sa conicité servant de limitation.

11. Actionneur selon l'une quelconque des revendications précédentes, **caractérisé en ce que** l'organe d'arrêt (40) est disposé coaxialement à l'axe longitudinal d'un arbre (46) d'un entraînement (48), notamment d'un moteur électrique et est connecté fonctionnellement par le biais d'un élément de rappel (50) à l'arbre (46) de l'entraînement (48).

12. Actionneur selon l'une quelconque des revendications précédentes, **caractérisé en ce que** l'élément de rappel (50) présente sur la périphérie tournée vers l'arbre (46) un filet femelle (52) qui correspond au filet mâle (54) de l'arbre (46).

13. Actionneur selon l'une quelconque des revendications précédentes, **caractérisé en ce que** l'arbre (46) passe tangentiellement devant le tourillon de verrouillage (16).

14. Actionneur selon l'une quelconque des revendications précédentes, **caractérisé en ce que** le dispositif de blocage (20) comprend un élément de ressort (56) qui s'appuie d'une part sur l'organe d'arrêt (40) du dispositif de blocage (20) et d'autre part sur le boîtier (24).

15. Actionneur selon l'une quelconque des revendications précédentes, **caractérisé en ce que** l'on peut appliquer une force de verrouillage sur l'organe d'arrêt (40) par le biais de l'élément de ressort (56).

16. Actionneur selon l'une quelconque des revendications précédentes, **caractérisé en ce que** le tourillon de verrouillage (16) présente à son extrémité tournée vers le volet d'obturation (14) une pièce de pression (58).

17. Actionneur selon l'une quelconque des revendications précédentes, **caractérisé en ce que** la pièce de pression (58) possède une forme sphérique au moins dans la région d'appui du volet d'obturation (14).

18. Actionneur selon l'une quelconque des revendications précédentes, **caractérisé en ce que** le tourillon de verrouillage (16) présente un élément de verrouillage (60) en dessous de la pièce de pression (58).

19. Actionneur selon l'une quelconque des revendications précédentes, **caractérisé en ce que** dans la région d'appui du volet d'obturation du bouchon de remplissage (15) sur la pièce de pression (58), un élément de réception (62) est intégré dans le volet d'obturation du bouchon de remplissage (15), lequel correspond avec l'élément de verrouillage (60) dans la position appliquée ouverte du volet d'obturation du bouchon de remplissage (15).

20. Actionneur selon l'une quelconque des revendications précédentes, **caractérisé en ce que** le mouvement de rotation et de translation du tourillon de verrouillage (16) relie l'élément de réception (62) à l'élément de verrouillage (60) par engagement par force.

21. Actionneur selon l'une quelconque des revendications précédentes, **caractérisé en ce que** le tourillon de verrouillage (16), le dispositif de blocage (20) et l'entrainement sont intégrés dans le boîtier (24) et le couvercle de boîtier (26).

22. Actionneur selon l'une quelconque des revendications précédentes, **caractérisé en ce qu'**un joint d'étanchéité en caoutchouc pulvérisé (64) est disposé entre le boîtier (24) et le couvercle de boîtier (26).

23. Volet d'obturation pour une baie de carrosserie d'un véhicule automobile, notamment volet d'obturation du bouchon de remplissage, **caractérisé par** un actionneur selon l'une quelconque des revendications 1 à 22.
